Europäisches Patentamt

European Patent Office

Office européen des brevets

(11) Publication number: **0 323 653**
A1

# EUROPEAN PATENT APPLICATION

(21) Application number: 88200023.5

(22) Date of filing: 08.01.88

(51) Int. Cl.4: **C08J 9/06** , **C08L 53/02** ,
//(C08L53/02,27:00)

(43) Date of publication of application:
**12.07.89 Bulletin 89/28**

(84) Designated Contracting States:
**ES**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Morino, Katsuaki
11-24, 2-Chome Tsukiji
Chuo-ku Tokyo(JP)**
Inventor: **Ono, Hisao
11-24, 2-Chome Tsukiji
Chuo-ku Tokyo(JP)**
Inventor: **Yanagisawa, Shoji
11-24, 2-Chome Tsukiji
Chuo-ku Tokyo(JP)**
Inventor: **Miyachi, Takumi
11-24, 2-Chome Tsukiji
Chuo-ku Tokyo(JP)**

(74) Representative: **Aalbers, Onno et al
P.O. Box 302
NL-2501 CH The Hague(NL)**

(54) Cross-linked foamed composition and process for the preparation thereof.

(57) A cross-linked foamed composition prepared by cross-linking and foaming in a heat medium
(1) 20 to 100% by weight of a block copolymer of an aromatic vinyl compound and a conjugated diene compound and/or a selectively hydrogenated product thereof,
(2) 0 to 80% by weight of a natural and/or synthetic rubber, the sum of said percentages being 100, and, calculated on 100 parts by weight of [(1) + (2)].
(3) 0 to 300 parts by weight of a softener,
(4) 0 to 600 parts by weight of an inorganic filler,
(5) 3 to 60 parts by weight of a blowing agent, and
(6) 0.1 to 10 parts by weight of a cross-linking agent.

# CROSS-LINKED FOAMED COMPOSITION AND PROCESS FOR THE PREPARATION THEREOF

The invention relates to a cross-linked foamed composition and to a process for the preparation thereof.

For cross-linked and foamed materials, natural rubber, synthetic rubber, poly(1,2-butadiene) (1,2-PBD) and ethylene-vinyl acetate copolymer (EVA) are known to be used. However, most of these are prepared by a process in which the decomposition of the blowing agent and the cross-linking reaction take place while the starting compound is fully packed in the mould, after which foaming is effected outside the mould.

The preparation of a foamed substance by cross-linking in hot air without the use of a mould does not often occur, but it has been tried with natural and synthetic rubber. However, the foamed natural and synthetic rubber substances obtained by this cross-linking method are unsatisfactory in that they have a low degree of foam expansion and poor cushioning and gas permeability properties.

It is an object of the present invention to provide a cross-linked foamed composition which has a high degree of foam expansion, a light weight, good cushioning, gas permeability and sound proofing properties.

Accordingly, the invention provides a cross-linked foamed composition, characterized in that it is prepared by cross-linking and foaming in a heat medium of a starting mixture comprising the following components:-

(1) in the range of from 20-100% by weight of a block copolymer of an aromatic vinyl compound and a conjugated diene compound and/or a selectively hydrogenated product thereof, and

(2) in the range of from 0 to 80% by weight of one or more rubbers selected from natural rubber, diene type synthetic rubber and non-diene type synthetic rubber,

the sum of said percentages being 100, and calculated on 100 parts by weight of $[(1) + (2)]$,

(3) in the range of from 0 to 300 parts by weight of a softener,

(4) in the range of from 0 to 600 parts by weight of an inorganic filler,

(5) in the range of from 3 to 60 parts by weight of a blowing agent, and

(6) in the range of from 0.1 to 10 parts by weight of a cross-linking agent.

The invention further provides a process for the manufacture of a cross-linked foamed composition which process comprises blending the following components:-

component (1) in the range of from 20 to 100% by weight of a block copolymer of an aromatic vinyl compound and/or a selectively hydrogenated product thereof and

component (2) in the range of from 0 to 80% by weight of one or more rubbers selected from natural rubber, diene type synthetic rubber and non-diene type synthetic rubber,

the sum of said percentages being 100,

and, calculated on 100 parts by weight of $[(1) + (2)]$,

component (3) in the range of from 0 to 300 parts by weight of a softener,

component (4) in the range of from 0 to 600 parts by weight of an inorganic filler,

component (5) in the range of from 3 to 60 parts by weight of a blowing agent, and

component (6) in the range of from 0.1 to 10 parts by weight of a cross-linking agent,

and cross-linking and foaming in a heat medium the blend thus formed.

The aromatic vinyl-conjugated diene block copolymer or aromatic vinyl-hydrogenated conjugated diene block copolymer (1) used in the present invention is thermoplastic and may be a block copolymer represented by the following formula

$(A-B)_n$ A, $(A-B)_n$ or $\{(A-B)_n \}_m$ C

wherein $4 \geqq n \geqq 1, 8 \geqq m \geqq 2$,

A represents an aromatic vinyl compound polymer,

B represents a conjugated diene polymer or copolymer or a hydrogenated polymer of a conjugated diene polymer or copolymer, and

C represents a coupling agent residue.

In order that component (1) used in the present composition has moderate hardness and cushioning, the aromatic vinyl compound (A) is suitably present in a quantity in the range of from 7% to 90%, preferably of from 10% to 70%, and its molecular weight lies between 10,000 and 1,000,000, more preferably between 70,000 and 300,000, so that an even more excellent foamed composition according to the present invention is obtained.

In the afore-mentioned component mixture $[(1) + (2)]$, component (1) is present in an amount in the range of from 20 to 100% by weight, preferably 40-90% by weight, since with less than 20% by weight it is difficult to obtain a foamed substance with a great expansion rate.

Exemplary aromatic vinyl compounds are styrene, alpha-methylstyrene, ortho-, meta- and para-methylstyrene, o-, m- and p-ethylstyrene, o-, m- and p-methoxystyrene, dimethylaminostyrene, o-, m- and p-isopropylstyrene, p-t-butylstyrene. Of these, styrene, para-methylstyrene and alpha-methylstyrene are preferred.

For the polymers, a polymer of only one, or a block or random copolymer composed of two or more of these monomers may be used.

There are no limitations as to the content of the aromatic vinyl compound present; it differs with the molecular weight and the use envisaged, but suitably it lies between 7% and 90%, preferably between 10% and 70% and more preferably 10% and 50%.

For the conjugated diene polymer or copolymer or the hydrogenated polymer of a conjugated diene polymer or copolymer, a single butadiene, isoprene, piperylene polymer, or a block or a random copolymer composed of two or more thereof, or a copolymer in which the arrangement of the aromatic vinyl compound part is random or tapered, and hydrogenated polymers of these conjugated diene polymer may be used.

For obtaining the foamed substance aimed at in the present invention it is preferred to use styrene as the aromatic vinyl compound and butadiene and/or iosprene as the conjugated diene compound.

In the present invention, natural rubber, diene-type synthetic rubber, non-diene-type rubber are used in a range of 0 to 80% by weight, preferably of 10-60% by weight, mainly to control the elasticity and the cross-linking speed of the foamed substance. Exemplary are natural rubber (NR), diene-type rubbers, such as polyisoprene rubber (IR), styrene-butadiene rubber (SBR), polybutadiene rubber (BR), poly(1,2-butadiene) rubber (RB), acrylonitrile rubber (NBR), chloroprene rubber (CR) and non-diene-type rubbers, such as ethylene-propylene rubber (EPM), ethylene-propylene-terpolymer (EPDM), ethylene-vinyl acetate copolymer (EDA), acrylic rubber (ACM, ANM), fluorine rubbers. Preferred are NR and diene-type rubbers, in particular IR and RB.

The softener used as component (3) in the present invention may be an aromatic, naphthenic or paraffinic process oil, petroleum-based asphalts, such as street asphalt, blown asphalt, petroleum-based softeners, such as lubricating oil, solid paraffins, liquid paraffins, vaseline; coal tar softeners, such as coal tar, coal tar pitch, resinous oil softeners, such as castor oil, linseed oil, rape seed oil, coconut oil; waxes, such as bees wax, carnauba wax, lanolin; tolu oil and factice.

One or a combination of two or more of these may be used. Suitable softeners are process oil, petroleum asphalt; preferably a process oil and a petroleum asphalt are used simultaneously. When a process oil and a petroleum asphalt are used simultaneously, foaming during cross-linking is the same as when a process oil is used alone, while the foamed composition will have a higher degree of hardness.

The softener component (3) is present in a quantity in the range of from 0 to 300 parts by weight, preferably 50 to 150 parts by weight on 100 parts by weight of components [(1) + (2)]. When more than 300 parts by weight is present, there is a great risk of softener bleed and handling becomes difficult.

The inorganic filler used as component (4) in the present invention may be for instance light calcium carbonate, heavy calcium carbonate, various kinds of surface treated calcium carbonates, and talc, magnesium hydroxide, mica, clay, barium sulphate, natural silicic acids, synthetic silicic acids (white carbon), titania and various carbon blacks. Of these inorganic fillers, heavy calcium carbonate is preferred for its economic advantages.

The quantity of inorganic filler used is in the range of from 0 to 600 parts by weight, preferably 0 to 400 parts by weight, calculated on 100 parts by weight of components [(1) + (2)]. When more than 600 parts by weight is blended in, it will be hard to obtain a high degree of foaming and the mechanical strength of the foamed material obtained will be quite poor.

The blowing agent used in the present invention as component (5) may be a well known inorganic or organic blowing agent. These may also be used simultaneously. Exemplary blowing agents are sodium bicarbonate, aluminium bicarbonate, sodium carbonate, aluminium carbonate, azodicarbonamide (ADCA), dinitrosopentamethylenetetramine (DNPT), dinitrosoterephthalamide, azobisisobutyro nitrile, azodicarboxylic acid barium, sulphonyl hydrazide, toluenesulphonyl hydrazide. These blowing agents may well be used together with such well-known blowing aids as urea and urea derivatives.

The amount of blowing agent used is in the range of from 3 to 60 parts by weight, preferably 5 to 40 parts by weight on 100 parts by weight of components [(1) + (2)]. When less than 3 parts by weight of blowing agent is used, the foamed composition obtained will have a low foam expansion rate and when more than 60 parts by weight is present, the amount of gas formed by the decomposition of the blowing agent will become too large and the external appearance of the foamed product will be poor.

In the preparation of the cross-linked foamed composition of the present invention, a cross-linking agent

3

is added in addition to the afore-mentioned ingredients to form the foam substance. Moreover, energy such as electron rays, ultra violet rays may also be used as cross-linking and blowing aids. As cross-linking agents, sulphur and various kind of organic peroxides may be mentioned. Exemplary organic peroxides are dicumyl peroxide, 1,1-bis(t-butylperoxy)-3,3,5-trimethylcyclohexane, t-butylperoxybenzoate, 2,5-dimethyl-2,5-bis(t-butylperoxy)hexane, t-butyl peroxyisopropylcarbonate. The cross-linking agent is suitably present in an amount in the range of from 0.5 to 5% by weight, calculated on 100 parts by weight of the sum of components (1) and (2).

In the case of sulphur vulcanization, various vulcanization accelerators may be added simultaneously to carry out the cross-linking and blowing. Exemplary vulcanization accelerators are dibenzothiazyldisulphide (MBTS), 2-mercaptobenzothiazole (MBT), N-cyclohexyl-2-benzothiazyl-sulphenamide (CBS), N-oxyzoethylene-2-benzothiazyl-sulphenamide (DBS), tetramethylthiurea disulphide (TMTD), tetramethylthiurea monosulphide (TMTM).

Generally, in hot air cross-linking with an organic peroxide, the surface is softened by decomposition due to oxidation of the surface of the cross-linked product. In order to obviate this softening, the surface of the blend (the area that is in contact with the hot air) can be covered with a thin polyester film, or a thin sheet of a rubber compound which does not blend with the cross-linking agent, so that decomposition by oxidation in hot air cross-linking will be stopped and a good cross-linked foamed substance can be obtained.

Further, from the point of view of cross-linking efficiency, sulphur vulcanization is more desirable than cross-linking with an organic peroxide.

Besides the afore-mentioned additives, other additives such as cross-linking aids, anti-ageing agents, processing aids, plasticizers and tackifiers may suitably be added as required.

There are no specific restrictions as to the method of mixing the afore-mentioned components (1)-(5) and further compounding ingredients; the usual mixing methods for preparing rubber blends, such as the Banbury mixer, pressure kneader, open roll may be applied. After the non-cross-linked product obtained is shaped as required into, for instance, sheets, it is subjected to cross-linking and foaming in a heat medium. Cross-linking and foaming is carried out in hot air of a temperature in the range of from 100 to 200 °C, preferably 120 to 170 °C, and as the temperature rises above the decomposition temperature of the blowing agent, the blend is cross-linked and the blowing agent decomposes. During the process there is no particular need for pressure, the cross-linking and foaming can be carried out at atmospheric pressure.

The heat medium used in the present invention may be a gas, such as air or nitrogen, hot fluids, hot solids, such as hot dust and hot fine granules. Of these, a hot gas is preferred, and hot air in particular. Furthermore, the cross-linking and foaming may be carried out on top of a hot metal plate.

The cross-linking and foaming operations can be performed batch-wise or continuously.

Even though the cross-linking in a heat medium is carried out at atmospheric pressure and without the use of a metal mould, the cross-linked and foamed substance of the present invention has a high degree of foam expansion, is light-weight and has very good cushioning, gas permeability and sound proofing properties.

The cross-linked and foamed substance of the present invention may be put to a wide range of uses, e.g. as material for foot wear, industrial articles, as shock absorbing material, sealing material, lining material, such as sound proofing and sound absorbing material, insulating material, carpeting and for metal plate laminating.

The following Examples further illustrate the invention. The comparative Experiments are not according to the invention. The abbreviations "pbw" and "%wt" mean "parts by weight" and "per cent by weight", respectively.

In the Examples and Comparative Experiments, tensile strength and tension pull were determined by the JIS K-6301 method, hardness with the rubber test type C (sponge hardness meter, type Macromolecular Gauge), specific gravity with the floating method and the foam expansion rate by comparing the thickness of samples taken before and after foaming.

### Example 1

100 pbw of a styrene-butadiene block copolymer (40% by weight bonded styrene) (ex Japan Synthetic Rubber, JSR TR 2000) and further ingredients were mixed in a BR type Banbury mixer in proportions as listed in Table 1 and rolled into 2 mm thick sheeting with the aid of a 25.4 cm test roller to form a non-cross-linked sheet, which was cross-linked and foamed for 25 minutes in hot air at a temperature of 145 °C to obtain a foamed substance. The resulting properties are listed in Table 1.

## Examples 2-4

Foamed substances were prepared in the same way as in Example 1, except that 70 pbw of a styrene-butadiene block copolymer (40% by weight bonded styrene) (ex Japan Synthetic Rubber, JSR TR 2000) was used, and for the rubber components, 30 pbw of 1,2-polybutadiene (ex Japan Synthetic Rubber, JSR RB 820), 30 pbw of polyisoprene rubber (ex Japan Synthetic Rubber, JSR IR 2200) and 30 pbw of natural rubber. The resulting properties are listed in Table 1.

## Examples 5-6

Foamed substances were prepared in the same way as in Example 1, except that 100 pbw of a styrene-butadiene block copolymer (60% by weight bonded styrene) (ex Japan Synthetic Rubber, JSR TR 2400) and 50 pbw of a styrene-butadiene block copolymer (60% by weight bonded styrene) (JSR TR 2400) respectively, and 50 pbw of natural rubber were used. The resulting properties are listed in Table 1.

## Examples 7-8

Foamed substances were prepared in the same way as in Example 1, except that 100 pbw of a styrene-isoprene block copolymer (15% by weight bonded styrene) (ex Japan Synthetic Rubber, JSR SIS 5000) and 70 pbw of a styrene-butadiene block copolymer (15% by weight bonded styrene) (JSR SIS 5000), respectively, and 30 pbw 1,2-polybutadiene (JSR RB 820) were used. The resulting properties are listed in Table 1.

## Example 9

A foamed substance was prepared under the same conditions as in Example 1, starting from 70 pbw of a styrene-butadiene block copolymer (40% by weight bonded styrene) (ex Japan Synthetic Rubber, JSR TR 2000) and 30 pbw of natural rubber and using the blends listed in Table 1. The resulting properties are listed in Table 1.

## Comparative Experiments A and B

Foamed substances were prepared in the same way as in Example 1 but using the polymers in proportions outside the scope of the present invention. 85 pbw of natural rubber was used with 15 pbw of a styrene-butadiene block copolymer (40% by weight bonded styrene) (JSR TR 2000) and 15 pbw of a styrene-butadiene block copolymer (60% by weight bonded styrene) (JSR TR 2400). The resulting properties are listed in Table 2.

## Comparative Experiment C

A foamed substance was prepared in the same way as in Example 1 but using 100 pbw styrene-butadiene rubber (ex Japan Synthetic Rubber, JSR 1507 which is a random polymer) as the polymer. The results are shown in Table 2.

## Comparative Experiment D

A foamed substance was prepared in the same way as in Example 1 but using 100 pbw natural rubber as the polymer. The resulting properties are listed in Table 2.

From Tables 1 and 2 it will be seen that Examples 1-9, in which the compositions used are in accordance with the present invention, as compared with Comparative Experiments A-D, which are outside the scope of the present invention, afford light weight products with a high degree of foam expansion.

The ingredients for the cross-linked and foamed substance according to the present invention, viz. a block copolymer of an aromatic vinyl compound and a conjugated diene compound and a specified kind of rubber are blended in proportions lying within a specified range and cross-linked and foamed in a heat medium such as hot air to prepare a product of unprecedentedly good properties. Since its foam expansion rate is high it is very light weight, and therefore it can be expected to have very good cushioning, gas permeability and sound proofing qualities, and it can be suitably used as material for foot wear, industrial articles, as shock absorbing material, sealing material, lining material, sound proofing and sound absorbing material, insulating material and carpeting.

Table 1

|  | 1 | 2 | 3 | 4 | 5 | 6 | 7 | 8 | 9 |
|---|---|---|---|---|---|---|---|---|---|
| JSR TR 2000 | 100 | 70 | 70 | 70 | - | - | - | - | 70 |
| JSR TR 2400 | - | - | - | - | 100 | 50 | - | - | - |
| JSR SIS 5000 | - | - | - | - | - | - | 100 | 70 | - |
| JSR RB 820 | - | 30 | - | - | - | - | - | 30 | - |
| JSR IR 2200 | - | - | 30 | - | - | - | - | - | - |
| NR RSS No. 3 | - | - | - | 30 | - | 50 | - | - | 30 |
| Zinc oxide No. 3 | 5 | 5 | 5 | 5 | 5 | 5 | 5 | 5 | 5 |
| Stearic acid | 3 | 3 | 3 | 3 | 3 | 3 | 3 | 3 | 3 |
| Heavy calcium carbonate | 200 | 200 | 200 | 200 | 200 | 200 | 200 | 200 | 200 |
| SRF carbon black | 3 | 3 | 3 | 3 | 3 | 3 | 3 | 3 | 3 |
| Naphthenic oil | 35 | 35 | 35 | 35 | 35 | 35 | 35 | 35 | 70 |
| Street asphalt | 35 | 35 | 35 | 35 | 35 | 35 | 35 | 35 | - |
| Vulcan accelarator DM | 2.5 | 2.5 | 2.0 | 2.0 | 2.5 | 1.5 | 1.5 | 1.5 | 2.0 |
| " M | 0.5 | 0.5 | 0.5 | 0.5 | 0.5 | 0.5 | 0.5 | 0.5 | 0.5 |
| " TT | 1.5 | 1.5 | 1.0 | 1.0 | 1.5 | 0.8 | 0.8 | 0.8 | 1.0 |

EP 0 323 653 A1

Table 1 (cont'd)

|  | 1 | 2 | 3 | 4 | 5 | 6 | 7 | 8 | 9 |
|---|---|---|---|---|---|---|---|---|---|
| Sulphur | 1.5 | 1.5 | 1.5 | 1.5 | 1.5 | 1.5 | 1.5 | 1.5 | 1.5 |
| Percumyl D *-1 | - | - | - | - | - | - | - | - | - |
| Blowing agent vinyol AK No. 2 *-2 | 25 | 25 | 25 | 25 | 25 | 25 | 25 | 25 | 25 |
| Total | 412.0 | 412.0 | 411.0 | 411.0 | 412.0 | 410.3 | 410.3 | 410.3 | 411.0 |
| Cross-linking conditions |  |  |  |  |  |  |  |  |  |
| Temp. (°C) | 145 | 145 | 145 | 145 | 145 | 145 | 145 | 145 | 145 |
| Time (min) | 25 | 25 | 25 | 25 | 25 | 25 | 25 | 25 | 25 |
| Properties |  |  |  |  |  |  |  |  |  |
| Foam expansion | 6.0 | 6.5 | 4.7 | 4.5 | 6.5 | 4.5 | 5.2 | 4.0 | 4.8 |
| Spec. gravity | 0.25 | 0.23 | 0.32 | 0.34 | 0.24 | 0.36 | 0.29 | 0.38 | 0.31 |
| Tensile strength ($Kgf/m^2$) | 0.3 | 0.3 | 0.4 | 0.4 | 0.3 | 0.4 | 0.4 | 0.3 | 0.4 |
| Tension pull (%) | 60 | 60 | 70 | 70 | 60 | 70 | 70 | 70 | 70 |
| Hardness (Type-c) | 30 | 28 | 38 | 39 | 28 | 34 | 24 | 33 | 31 |

*-1 ex Eiwa
*-2 dicumyl peroxide, ex Jap. Petroleum Resins

EP 0 323 653 A1

## Table 2

| | Comparative Experiments | | | |
| | A | B | C | D |
|---|---|---|---|---|
| JSR TR 2000 | 15 | - | - | - |
| JSR TR 2400 | - | 15 | - | - |
| JSR 1507 | - | - | 100 | - |
| NR RSS No. 3 | 85 | 85 | - | 100 |
| Ultrasen 631 | - | - | - | - |
| Zinc oxide No. 3 | 5 | 5 | 5 | 5 |
| Stearic acid | 3 | 3 | 3 | 3 |
| Heavy calcium carbonate | 200 | 200 | 200 | 200 |
| SRF carbon black | 3 | 3 | 3 | 3 |
| Naphtenic oil | 35 | 35 | 35 | 35 |
| Street asphalt | 35 | 35 | 35 | 35 |
| Vulcan. accelerator DM | 1.5 | 1.5 | 2.5 | 1.5 |
| "            "       M | 0.5 | 0.5 | 0.5 | 0.3 |
| "            "       TT | 0.3 | 0.3 | 1.5 | 0.5 |
| Sulphur | 1.5 | 1.5 | 1.5 | 1.5 |
| Percumyl D | - | - | - | - |
| Blowing agent vinyol AK No. 2 | 25 | 25 | 25 | 25 |
| Total | 409.8 | 409.8 | 412.0 | 409.8 |
| Cross-linking conditions | | | | |
| Temp. (°C) | 145 | 145 | 145 | 145 |
| Time (min) | 25 | 25 | 25 | 25 |
| Properties | | | | |
| Foam expansion | 2.6 | 2.4 | 1.9 | 2.1 |
| Spec. gravity | 0.58 | 0.63 | 0.79 | 0.71 |
| Tensile strength (Kgf/m2) | 1.2 | 1.4 | 0.7 | 1.5 |
| Tension pull (%) | 90 | 90 | 50 | 90 |
| Hardness (Type-c) | 18 | 21 | 17 | 14 |

8

**Claims**

1. A cross-linked foamed composition, characterized in that it is prepared by cross-linking and foaming in a heat medium of a starting mixture comprising the following components:-

Component (1) in the range of from 20 to 100% by weight of a block copolymer of an aromatic vinyl compound and a conjugated diene compound and/or a selectively hydrogenated product thereof and

Component (2) in the range of from 0 to 80% by weight of one or more rubbers selected from natural rubber, diene type synthetic rubber and non-diene type synthetic rubber,

the sum of said percentages being 100, and, calculated on 100 parts by weight of [(1) + (2)],

Component (3) in the range of from 0 to 300 parts by weight of a softener,

Component (4) in the range of from 0 to 600 parts by weight of an inorganic filler,

Component (5) in the range of from 3 to 60 parts by weight of a blowing agent, and

Component (6) in the range of from 0.1 to 10 parts by weight of a cross-linking agent.

2. A cross-linked foamed composition as claimed in claim 1 in which the starting mixture comprises the following components:-

- in the range of from 40 to 90% by weight of component (1),
- in the range of from 10 to 60% by weight of component (2),

the sum of said percentages being 100,

and, calculated on 100 parts by weight of [(1) + (2)],

- in the range of from 50 to 150 parts by weight of component (3),
- in the range of from 0 to 400 parts by weight of component (4),
- in the range of from 5 to 40 parts by weight of component (5), and
- in the range of from 0.5 to 5 parts by weight of component (6).

3. A cross-linked foamed composition as claimed in claim 1 or 2 in which the block copolymer of aromatic vinyl component and conjugated diene compound and/or the hydrogenated product thereof have the following general formula

$(A-B)_n A$, $(A-B)_n$ or $\{(A-B)_n\}_m C$

wherein $4 \geq n \geq 1$, $8 \geq m \geq 2$,

A represents an aromatic vinyl compound polymer,

B represents a conjugated diene polymer or copolymer or a hydrogenated polymer of a conjugated diene polymer or copolymer, and

C represents a coupling agent residue.

4. A cross-linked foamed composition as claimed in claim 3 in which the aromatic vinyl compound A is present in component 1 in a content in the range of from 10 to 50% by weight, calculated on component (1) and has a molecular weight in the range of from 10,000 to 1,000,000.

5. A cross-linked foamed composition as claimed in any one of the preceding claims in which in component (1) the aromatic vinyl compound is styrene and the conjugated diene compound is butadiene or isoprene.

6. A cross-linked foamed composition as claimed in any one of the preceding claims in which the heat medium is hot air.

7. A process for the manufacture of a cross-linked foamed composition as claimed in any one of the preceding claims which process comprises blending the following components:-

component (1) in the range of from 20 to 100% by weight of a block copolymer of an aromatic vinyl compound and/or a selectively hydrogenated product thereof and

component (2) in the range of from 0 to 80% by weight of one or more rubbers selected from natural rubber, diene type synthetic rubber and non-diene type synthetic rubber,

the sum of said percentages being 100,

and, calculated on 100 parts by weight of [(1) + (2)],

component (3) in the range of from 0 to 300 parts by weight of a softener,

component (4) in the range of from 0 to 600 parts by weight of an inorganic filler,

component (5) in the range of from 2 to 60 parts by weight of a blowing agent, and

component (6) in the range of from 0.1 to 10 parts by weight of a cross-linking agent,

and cross-linking and foaming in a heat medium the blend thus formed.

8. Shaped articles comprising a cross-linked foamed composition as claimed in any one of claims 1 to 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | CHEMICAL ABSTRACTS, vol. 104, no. 10, 10th March 1986, page 65, abstract no. 70106d, Columbus, Ohio, US; & JP-A-60 163 944 (JAPAN SYNTHETIC RUBBER CO., LTD) 26-08-1985 * Abstract * | 1-3,5,7,8 | C 08 J 9/06 C 08 L 53/02 // (C 08 L 53/02 C 08 L 21:00 ) |
| Y | IDEM | 1,6,7 | |
| Y | US-A-4 003 860 (A. LECLERC) * Claims; column 1, line 44 - column 2, line 52; column 2, line 60 - column 3, line 6; example * | 1,5,7,8 | |
| Y | | 1,6,7 | |
| X | GB-A-1 111 250 (PHILLIPS PETROLEUM CO.) * Claims 1-17,20-22; page 2, lines 39-51,79-104; example I, "Polymer B"; page 5, lines 9-13 * | 1-3,5,7,8 | |
| Y | | 1,6,7 | TECHNICAL FIELDS SEARCHED (Int. Cl.4) |
| X | DE-A-1 485 651 (BAYER) * Claim; page 3, lines 6-17; page 4, line 9 - page 5; examples * | 1-3,5,7,8 | C 08 J |
| Y | | 1,6,7 | |
| Y | CHEMICAL ABSTRACTS, vol. 77, no. 24, 11th December 1977, page 52, abstract no. 153275h, Columbus, Ohio, US; & JP-A-72 19 625 (SEKISUI KASEIHIN KOGYO K.K.) 05-06-1972 * Abstract * | 1,6,7 | |

-/-

The present search report has been drawn up for all claims

| Place of search | Date of completion of the search | Examiner |
|---|---|---|
| THE HAGUE | 01-09-1988 | HALLEMEESCH A.D. |

**European Patent Office**

# EUROPEAN SEARCH REPORT

Application Number

EP 88 20 0023

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-1 769 733 (VEB LEUNA-WERKE)<br>* Example I * | 1,6,7 | |
| A | US-A-4 520 138 (G.R. HIMES)<br>* Claims * | 1,3,4 | |
| Y | US-A-3 959 545 (R.W. SIEDENSTRANG)<br>* Claims * | 1,6,7 | |

TECHNICAL FIELDS SEARCHED (Int. Cl.4)

The present search report has been drawn up for all claims

| Place of search | Date of completion of the search | Examiner |
|---|---|---|
| THE HAGUE | 01-09-1988 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)